# EUROPÄISCHE PATENTSCHRIFT

(11) **EP 1 316 837 B1**
(45) Veröffentlichungstag und Bekanntmachung des Hinweises auf die Patenterteilung: **01.02.2006**
(21) Anmeldenummer: 02025218.5
(22) Anmeldetag: 12.11.2002
(51) Int. Cl.: G02C 13/00

(54) **Messgerät**
Measuring device
Dispositif de mesure

(30) Priorität: 29.11.2001 DE 20119468 U
(43) Veröffentlichungstag der Anmeldung: 04.06.2003
(73) Patentinhaber: Rupp + Hubrach Optik GmbH, 96050 Bamberg (DE)
(72) Erfinder: Gathmann, Lutz, 40474 Düsseldorf (DE)
(74) Vertreter: Rau, Albrecht

(56) Entgegenhaltungen:
- WO-A-01/84221
- DE-U- 20 119 468
- US-A- 1 484 365
- US-A- 3 623 689

## Beschreibung

Die Erfindung betrifft ein Meßgerät zum Messen des Fassungsscheibenwinkels der Brillengläser einer Brille.

Sportbrillen sind in der Regel besonders stark gebogen und verlaufen dadurch nahezu parallel zu der Kopfform des Brillenträgers. Die Brillengläser einer derartigen Sportbrille liegen deshalb nicht in einer Ebene, sondern verkippt und damit schräg vor dem Auge des Brillenträgers. Um sie in die gekrümmte Form der Brillenfassung integrieren zu können, sind sie stärker als normale Brillengläser gebogen. Die starke Krümmung hat bei Brillen mit Korrektion eine Abweichung von der optimalen Basiskurve und damit der optimalen Abbildung der Brillengläser bei seitlichen Blickbewegungen zur Folge. Dadurch, daß die Brillengläser zusätzlich verkippt in der Brillenfassung sitzen, werden die für die dioptrische Wirkung der Brillengläser gültigen Berechnungsgrundlagen außer Kraft gesetzt. Korrektionsgläser für Sportbrillen müssen somit separat berechnet werden. Die Verkippung der Brillengläser spielt dabei eine wesentliche Rolle.

Ein Mebgerät zur Ermittlung der Fassungsscheibenwinkels einer Brillenfassung wird z.B. in der Internationalen Veröffentlichungsschrift WO 01/84221 beschrieben. Hiervon ausgehend liegt der Erfindung die Aufgabe zugrunde, ein Meßgerät zu schaffen, mit dem der Fassungscheibenwinkel bzw. die Verkippung der Brillengläser einer Brille besonders einfach und genau bestimmt werden kann.

Diese Aufgabe wird erfindungsgemäß durch die Merkmale des Anspruchs 1 gelöst. Der Kern der Erfindung besteht darin, daß die Meßschenkel sowohl verschiebbar als auch schwenkbar gelagert sind, wodurch der Fassungsscheibenwinkel der Brillengläser auf der Winkelskala des Meßgeräts exakt bestimmt werden kann.

Weitere vorteilhafte Ausgestaltungen geben die Unteransprüche an.

Nachfolgend wird die Erfindung anhand eines bevorzugten Ausführungsbeispiels in Verbindung mit der Zeichnung näher beschrieben. Dabei zeigen:
- Figur 1: eine Ansicht des erfindungsgemäßen Meßgeräts von unten,
- Figur 2: eine Ansicht des Meßgeräts gemäß Fig. 1 von vorne,
- Figur 3: eine Ansicht des Meßgeräts gemäß Fig. 1 von oben ,
- Figur 4: eine perspektivische Ansicht des Meßgeräts gemäß Fig. 1,
- Figur 5: einen Schnitt durch das Meßgerät gemäß der Schnittlinie V-V in Figur 3 und
- Figur 6: eine Ansicht einer zu vermessenden Brille von oben.

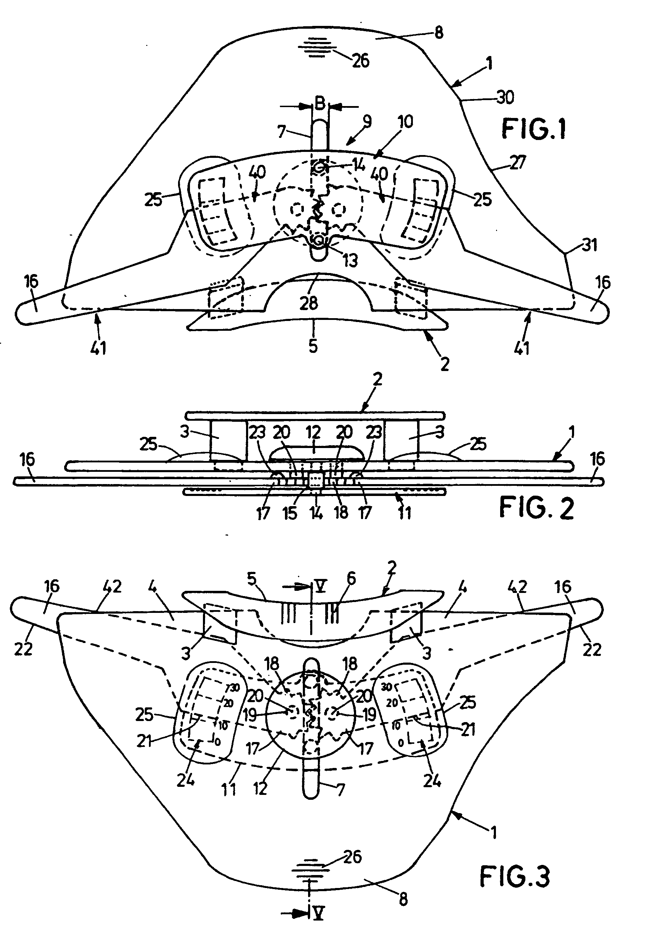

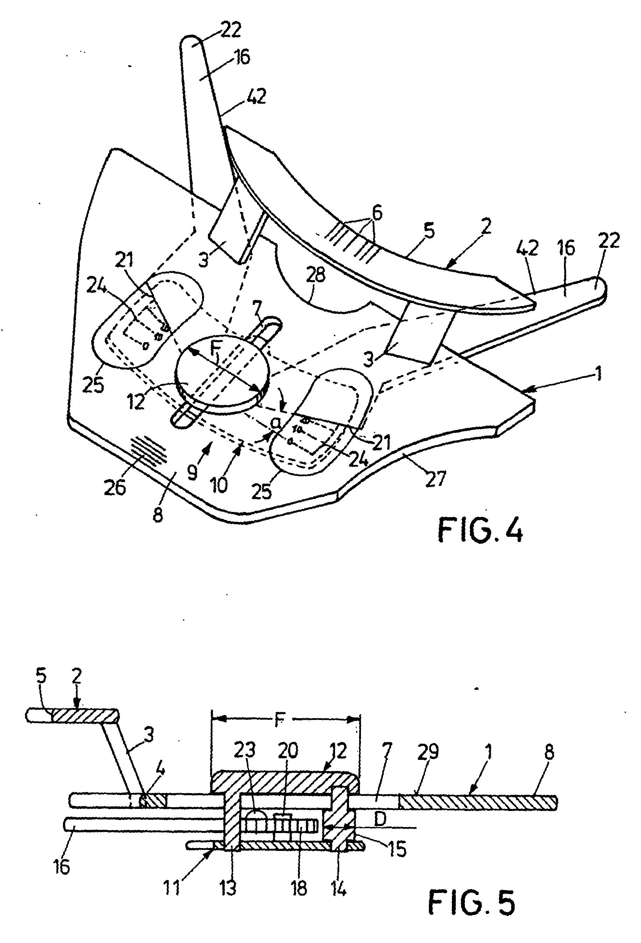

Ein in den Figuren 1- 5 dargestelltes Meßgerät umfaßt eine transparente, aus Kunststoff bestehende Grundplatte 1 und einen Anlagesteg 2, der über Anlagesteg-Füße 3 beabstandet mit der Grundplatte 1 verbunden ist. Die Anlagesteg-Füße 3 sind in einem hinteren Randbereich 4 der Grundplatte 1 angeordnet und verlaufen schräg zu der Grundplatte 1, so daß eine gekrümmte Anlegekante 5 des Anlagestegs 2 über die Grundplatte 1 hervorsteht. Der Anlagesteg 2 ist auf seiner der Grundplatte 1 abgewandten Seite mit Positionierungs-Markierungen 6 versehen. Der Anlagesteg 2 ist wie die Anlagesteg-Füße 3 aus Kunststoff gebildet. In der Grundplatte 1 verläuft eine schlitzartig ausgebildete Führungsausnehmung 7 mittig von dem Randbereich 4 zu einem Spitzenbereich 8 der Grundplatte 1. Der Spitzenbereich 8 liegt an dem dem Randbereich 4 gegenüberliegenden Ende der Grundplatte 1. Die Führungsausnehmung 7 erstreckt sich gerade und ist die Grundplatte 1 durchgreifend ausgebildet.

Das Meßgerät weist ferner eine Verschiebe-Einheit 9 auf, die einen in der Führungsausnehmung 7 verschiebbar geruhrten Schlitten 10 umfaßt. Der aus transparentem Kunststoff bestehende Schlitten 10 weist eine untere Skalenplatte 11 und eine obere Führungsscheibe 12 auf, die durch zwei in der Führungsausnehmung 7 geführte Führungsstifte 13, 14 beabstandet miteinander verbunden sind. Die Führungsscheibe 12 und die Skalenplatte 11 sind parallel zu der Grundplatte 1 angeordnet. Der Durchmesser F der Führungsscheibe 12 ist größer als die Breite B der Führungsausnehmung 7. Die Führungsscheibe 12 liegt auf der Oberseite 29 der Grundplatte 1 auf, während die Skalenplatte 11 unterhalb der Grundplatte 1 angeordnet ist. Der hintere, dem Randbereich 4 näherliegende Führungsstift 13 ist einstükkig mit der Führungsscheibe 12 ausgebildet. Der vordere Führungsstift 14 weist einen mit einem größeren Durchmesser D ausgebildeten Stift-Abschnitt 15 auf, der sich von der Unterseite der Grundplatte 1 bis zu der Oberseite der Skalenplatte 11 erstreckt. Der Durchmesser D des Stift-Abschnitts 15 ist größer als die Breite B der Führungsausnehmung 7, wodurch eine Fixierung der Grundplatte 1 erzielt wird.

Das Meßgerät umfaßt des weiteren zwei in einer zu der Grundplatte 1 parallelen Ebene verschwenkbare Meßschenkel 16 aus Kunststoff, deren eines Ende 17 jeweils einen Teil eines Zahnradkranzes 18 aufweist. Die Meßschenkel 16 sind farbig, aber dennoch transparent, was einen Kontrast zu der Skalenplatte 11 bewirkt. Der Zahnradkranz 18 ist mit dem jeweiligen Meßschenkel 16 einstückig ausgebildet und weist eine zentrale Lagerbohrung 19 auf. Jede Lagerbohrung 19 ist von einem Lagerzapfen 20 durchdrungen, der mit der Skalenplatte 11 einstückig verbunden und auf der der Grundplatte 1 zugewandten Seite der Skalenplatte 11 vorgesehen ist. Die Meßschenkel 16 sind zwischen der Grundplatte 1 und der Skalenplatte 11 angeordnet und liegen auf der Skalenplatte 11 teilweise auf. Das untere Ende des Führungsstifts 13 ist in eine entsprechende Ausnehmung der Skalenplatte 11 gesteckt. Der in die Skalenplatte 11 ragende Abschnitt des Führungsstifts 13 kann verjüngt ausgebildet sein. Die Verbindungen des vorderen Führungsstifts 14 mit der Führungsscheibe 12 und der Skalenplatte 11 sind als Steckverbindungen ausgebildet. Die Zahnradkränze 18 greifen unterhalb der Führungsausnehmung 7 ineinander, woraus eine Kopplung der Meßschenkel 16 resultiert. Die Meßschenkel 16 umfassen einen Ablesebereich 40 und einen Anlagebereich 41. Die Meßschenkel 16 weisen im Ablesebereich 40 dem Spitzenbereich 8 zugewandte Ablesekanten 21 auf und verjüngen sich in Richtung ihres freien Endes 22. Die Meßschenkel 16 weisen im Anlagebereich 41 zwei Anlageflächen 42 auf. Die Kanten der Anlageflächen 42 verlaufen parallel zu den Ablesekanten 21. Die Meßschenkel 16 sind außerdem jeweils mit einem Führungszapfen 23 versehen, der seitlich der Lagerbohrung 19 angebracht und auf der der Grundplatte 1 zugewandten Seite angeordnet ist. Der Führungszapfen 23 liegt dabei nahezu an der Unterseite der Grundplatte 1 an.

Auf der transparenten Skalenplatte 11 ist seitlich der Führungsstifte 13, 14 jeweils eine Winkelskala 24 aufgedruckt. Die Winkelskala 24 reicht von 0° bis 30°. Es können auch andere Winkelbereiche angegeben sein. Oberhalb der Winkelskala 24 ist ein Sicht-Bereich 25 in der Grundplatte 1 vorgesehen, der als optische Lupe ausgebildet ist. In dem Spitzenbereich 8 ist auf der Oberseite der Grundplatte 1 ein aufgerauhter Griffbereich 26 zum sicheren Halten des Meßgeräts ausgebildet.

Die Grundplatte 1 weist seitlich einen geformten Kantenabschnitt 27 auf, der einer für das maximal mögliche Schleifen von Brillengläsern relevanten Grundkurve, insbesondere der Grundkurve 8, entspricht. Der Kantenabschnitt 27 erstreckt sich zwischen den Punkten 30, 31 und weist eine konkav gekrümmte Kontur auf. Unterhalb des Anlagestegs 2 befindet sich mittig am Rand der Grundplatte 1 eine Nasenausnehmung 28. Die Kontur der Nasenausnehmung 28 ist halbkreisförmig.

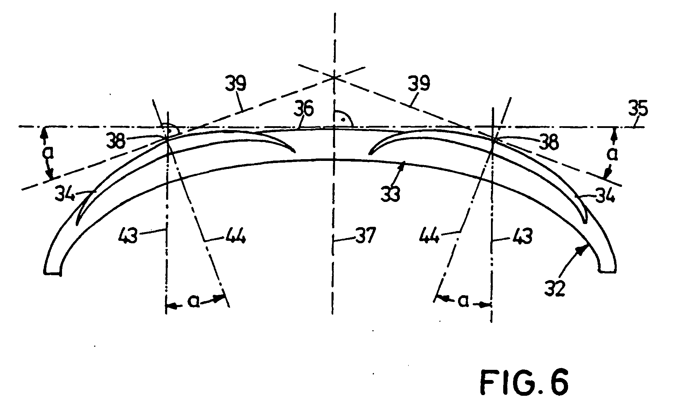

Nachfolgend wird die Funktion des Meßgeräts anhand einer in Figur 6 dargestellten, zu vermessenden Brille 32 beschrieben. Die Anlagekante 5 des Anlagestegs 2 wird derart an die Stirn einer die Brille 32 tragenden Person angelegt, daß die Unterseite des Anlegestegs 2 auf dem Brillengestell 33 der Brille 32 aufliegt. Die Positionierungs-Markierungen 6 helfen dabei, das Meßgerät mittig an die einer Tragesituation angepaßten Brille 32 anzulegen. Das Meßgerät wird an die Brillengläser 34 der Brille 32 angelegt, wodurch erreicht wird, daß das Meßgerät sich in der Fassungsebene 35 der Brille 32 befindet. Die Fassungsebene 35 verläuft direkt an der Seite 36 der Brille 32, die der die Brille 32 tragenden Person abgewandt ist, und steht senkrecht zu der Brillen-Symmetrieebene 37 sowie zu der Führungsausnehmung 7 des Meßgeräts. Die Anlageflächen 42 der Meßschenkel 16 müssen anschließend mit der Verschiebe-Einheit 9 so ausgerichtet werden, daß sie an den Brillengläsern 34 tangential anliegen. Die Meßschenkel 16 berühren die Brillengläser 34 somit jeweils in einem Berührungspunkt 38. Die Zahnradkränze 18 stellen dabei sicher, daß auf beiden Winkelskalen 24 ein identischer Winkel a eingestellt ist. Dieser Fassungsscheibenwinkel a wird durch die Ablesekanten 21 der Meßschenkel 16 auf den Winkelskalen 24 angezeigt. Als der auf der Winkelskala 24 angegebene Fassungscheibenwinkel a wird der Winkel bezeichnet, der zwischen der Fassungsebene 35 der Brille 32 und einer Brillenglas-Tangentialebene 39 aufgespannt wird. Die Anlageflächen 42 der Meßschenkel 16 liegen beim Bestimmen des Fassungscheibenwinkel a in der Brillenglas-Tangentialebene 39. Der Fassungscheibenwinkel a entspricht außerdem dem Winkel, der zwischen der Sehachse 43 der die Brille 32 tragenden Person bei Nullblickrichtung und der optischen Achse 44 des Brillenglases 34 vorliegt. Die Sehachse 43 steht lotrecht zu der Fassungsebene 35. Außerdem steht die optische Achse 44 des Brillenglases 34 senkrecht zu der Brillenglas-Tangentialen 39. Ein ebenes Brillengestell weist somit einen Fassungscheibenwinkel a von 0° auf. Je stärker das Brillengestell also gekrümmt ist, desto größer ist der gemessene Fassungscheibenwinkel a.

## Patentansprüche

1. Meßgerät zum Messen des Fassungsscheibenwinkels der Brillengläser einer Brille mit
a) einer Grundplatte (1),
b) einer mit der Grundplatte (1) verbundenen Anlagekante (5) zur Anlage an die Stirn einer eine zu vermessende Brille tragenden Person,
c) zwei verschwenkbar gelagerten Meßschenkeln (16) zur Anlage an die zu vermessende Brille,
d) einer Verschiebe-Einheit (9) zum geführten Verschieben der Meßschenkel (16) auf der Grundplatte (1),
e) mindestens einer Winkelskala (24) zum Bestimmen des Inklinationswinkels (a) der Meßschenkel (16) gegenüber der Grundplatte (1) und damit des Fassunggsscheibenwinkels der Brillengläser.

2. Meßgerät nach Anspruch 1, wobei die Verschiebe-Einheit (9) eine in der Grundplatte (1) angeordnete Führungsausnehmung (7) aufweist.

3. Meßgerät nach Anspruch 2, wobei die Verschiebe-Einheit (9) einen Schlitten (10) aufweist, der in der Führungsausnehmung (7) verschiebbar geführt ist.

4. Meßgerät nach Anspruch 1, wobei die Meßschenkel (16) gegenüber dem Schlitten (10) verschwenkbar gelagert sind.

5. Meßgerät nach Anspruch 4, wobei die Meßschenkel (16) über Zahnräder (18) miteinander gekoppelt sind.

6. Meßgerät nach einem der Ansprüche 3 bis 5, wobei der Schlitten (10) eine Skalenplatte (11) aufweist, auf der die mindestens eine Winkelskala (24) angebracht ist.

7. Meßgerät nach Anspruch 6, wobei die Grundplatte (1) mindestens im Bereich oberhalb der mindestens einen Winkelskala (24) einen Sicht-Bereich (25) aufweist, der transparent ausgebildet ist.

8. Meßgerät nach Anspruch 7, wobei der Sicht-Bereich (25) als optische Lupe ausgebildet ist.

9. Meßgerät nach Anspruch 1, wobei die Anlagekante (5) an einem Anlagesteg (2) vorgesehen ist.

10. Meßgerät nach Anspruch 9, wobei der Anlagesteg (2) gegenüber der Grundplatte (1) beabstandet angeordnet ist.

11. Meßgerät nach Anspruch 9 oder 10, wobei der Anlagesteg (2) Positionierungs-Markierungen (6) zur mittigen Anlage an der zu vermessenden Brille aufweist.

12. Meßgerät nach einem der vorherigen Ansprüche, wobei die Grundplatte (1) einen Kantenabschnitt (27) aufweist, der einer für das Schleifen von Brillengläsern relevanten Grundkurve entspricht.

13. Meßgerät nach einem der vorherigen Ansprüche, wobei die Meßschenkel (16) eine andere Farbe als die Skalenplatte (11) aufweisen.

14. Meßgerät nach einem der vorherigen Ansprüche, wobei die Grundplatte (1) einen aufgerauhten Griffbereich (26) aufweist.

## Claims

1. A measuring instrument for measuring a mounting lens angle of lenses of a pair of glasses, comprising
a) a base plate (1);
b) a contact edge (5), which is joined to the base plate (1), for a spectacled person's forehead to rest on;
c) two pivotably mounted measuring legs (16) for application to the glasses that are to be measured;
d) a displacement unit (9) for guided displacement of the measuring legs (16) on the base plate (1);
e) at least an angle measuring scale (24) for determination of the angle of inclination (a) of the measuring legs (16) in relation to the base plate (1) and thus of the mounting lens angle of the lenses.

2. A measuring instrument according to claim 1, wherein the displacement unit (9) includes a guide recess (7) disposed in the base plate (1).

3. A measuring instrument according to claim 2, wherein the displacement unit (9) includes a skid (10) which is guided for displacement in the guide recess (7).

4. A measuring instrument according to claim 1, wherein the measuring legs (16) are pivoted in relation to the skid (10).

5. A measuring instrument according to claim 4, wherein the measuring legs (16) are coupled with one another by gears (18).

6. A measuring instrument according to one of claims 3 to 5, wherein the skid (10) comprises a graduated plate (11) with the at least one angle measuring scale (24) attached thereto.

7. A measuring instrument according to claim 6, wherein the base plate (1) comprises a transparent window (25) at least in an area above the at least one angle measuring scale (24).

8. A measuring instrument according to claim 7, wherein the window (25) is an optical magnifying glass.

9. A measuring instrument according to claim 1, wherein the contact edge (5) is provided on a contact ridge (2).

10. A measuring instrument according to claim 9, wherein the contact ridge (2) is spaced from the base plate (1).

11. A measuring instrument according to claim 9 or 10, wherein the contact ridge (2) has positioning marks (6) for central application of the glasses that are to be measured.

12. A measuring instrument according to one of the preceding claims, wherein the base plate (1) comprises an edge portion (27) which corresponds to a basic curve that is relevant to the grinding of lenses.

13. A measuring instrument according to one of the preceding claims, wherein the measuring legs (16) have a color different from that of the graduated plate (11).

14. A measuring instrument according to one of the preceding claims, wherein the base plate (1) comprises a roughened handling portion (26).

## Revendications

1. Appareil de mesure pour mesurer l'angle des verres dans la monture d'une paire de lunettes, comportant
a) une plaque de base (1),
b) une arête d'application (5) reliée à la plaque de base (1) et destinée à l'application contre le front d'une personne portant des lunettes à mesurer,
c) deux branches de mesure (16) montées mobiles en pivotement et destinées à l'application contre les lunettes à mesurer,
d) une unité de translation (9) pour la translation guidée des branches de mesure (16) sur la plaque de base (1),
e) au moins une échelle angulaire (24) pour déterminer l'angle d'inclinaison (a) des branches de mesure (16) par rapport à la plaque de base (1) et ainsi de l'angle des verres dans la monture.

2. Appareil de mesure selon la revendication 1, dans lequel l'unité de translation (9) présente un évidement de guidage (7) ménagé dans la plaque de base (1).

3. Appareil de mesure selon la revendication 2, dans lequel l'unité de translation (9) comprend un chariot (10) qui est guidé en translation dans l'évidement de guidage (7).

4. Appareil de mesure selon la revendication 1, dans lequel les branches de mesure (16) sont montées mobiles en pivotement par rapport au chariot (10).

5. Appareil de mesure selon la revendication 4, dans lequel les branches de mesure (16) sont couplées l'une à l'autre via des roues dentées (18).

6. Appareil de mesure selon l'une des revendications 3 à 5, dans lequel le chariot (10) comprend une plaque à échelle (11) sur laquelle est appliquée au moins une échelle angulaire (24).

7. Appareil de mesure selon la revendication 6, dans lequel la plaque de base (1) comprend au moins dans la zone au-dessus de ladite au moins une échelle angulaire (24) une zone de vision (25) réalisée transparente.

8. Appareil de mesure selon la revendication 7, dans lequel la zone de vision (25) est réalisée sous forme de loupe optique.

9. Appareil de mesure selon la revendication 1, dans lequel l'arête d'application (5) est prévue sur une barrette d'application (2).

10. Appareil de mesure selon la revendication 9, dans lequel la barrette d'application (2) est agencée à distance de la plaque de base (1).

11. Appareil de mesure selon l'une ou l'autre des revendications 9 et 10, dans lequel la barrette d'application (2) comprend des marquages de positionnement (6) pour l'application centrale sur les lunettes à mesurer.

12. Appareil de mesure selon l'une des revendications précédentes, dans lequel la plaque de base (1) comprend un tronçon d'arête (27) qui correspond à une courbe de base pertinente pour tailler les verres de lunettes.

13. Appareil de mesure selon l'une des revendications précédentes, dans lequel les branches de mesure (16) présentent une autre couleur que la plaque à échelle (11).

14. Appareil de mesure selon l'une des revendications précédentes, dans lequel la plaque de base (1) présente une zone de préhension (26) rugueuse.
